# EUROPEAN PATENT APPLICATION

(11) **EP 3 772 283 A1**
(43) Date of publication of application: **10.02.2021**
(21) Application number: 20189733.7
(22) Date of filing: 06.08.2020
(51) Int. Cl.: A22C 25/02, A22C 29/02, A22C 29/04

(54) **A WASHING DEVICE**

(30) Priority: 08.08.2019 DK PA201970501
(71) Applicant: K.A.J. Holding ApS, 9320 Hjallerup (DK)
(72) Inventor: JENSEN, Karl Anker, 9320 Hjallerup (DK)
(74) Representative: Zacco Denmark A/S

(57) **Abstract**

The invention relates to a washing device for fish and shellfish. The device according to the invention comprises an inlet, and a washing portion, which is constituted by a washing tube with a diameter, which as a minimum is larger than the thickness of the largest one of the products to be washed, wherein the washing portion is equipped with a number of nozzles, which conduct a water jet creating a water flow in the washing tube so that the water jet partly is used for moving one or more fish and/or shellfish around in the washing tube, and partly the water jet defines a direction of advancement, meaning that it contributes to advancing the product.

## Description

The present invention relates to a washing device for washing of for example fish and shellfish, such as Norway lobster, and molluscs.

Today, fish and shellfish are primarily washed in closed vessels by rinsing them, and it is usually necessary to move the product around between different work stations. Drum washers and conveyor belts that pass through flowing water are also available, which most often involves very extensive water consumption relative to the washing effect, and such structures take up much space and require drive units for driving drums and conveying. The various fish washing devices are used both at sea and on land, and when open vessels are used in installations at sea, problems may arise at rough sea.

The object of the present invention is to provide a washing device, which offers a range of advantages relative to the prior art.

Disclosed herein in an aspect of the present invention is a washing device for washing fish and/or shellfish, wherein the washing device comprises an inlet and a washing portion, wherein the washing portion comprises a washing tube with a first diameter, which as a minimum is larger than the largest one of the products to be washed, wherein the washing portion furthermore is equipped with a number of nozzles arranged to generate a water jet in the washing tube, which water jet creates a water flow in the washing tube so that the water jet partly is used for moving one or more fish and/or shellfish around in the washing tube, and partly the water jet defines a direction of advancement, meaning that it contributes to advancing the one or more fish and/or shellfish.

Thereby a machine is achieved that is operated without mechanical drive units, as the entire washing process, when placing many nozzles at various points on the tubes and at different angles, takes place in such a manner that the advancement of the fish can be controlled, and at the same time it is ensured that the fish are moved around so much that they are rinsed/washed on all surfaces. The washing device is particularly advantageous for use on board fishing vessels, as the washing device takes up very little space and ensures easy transportation of the product without manual work, and there is no risk that water splashes out as when washing in open containers. Moreover, it is advantageous that the present invention can be configured so that it fits into the process procedure and functions as transportation device simultaneously with washing of the product.

In one or more embodiments, the number of nozzles is arranged to generate a water jet close to the inner periphery of the washing tube.

In one or more embodiments, the water jet creates a substantially rotating water flow in the washing tube.

In one or more embodiments, the outlet is placed in a separate tube and a transition is placed between the inlet tube and the washing tube.

In one or more embodiments, the transition forms a 90 degree bend.

In one or more embodiments, the washing device further comprises additional nozzles placed in the inlet tube and in the transition.

In one or more embodiments, the angles of the nozzles and/or the additional nozzles can be adjusted as required.

In one or more embodiments, the angle of each of the nozzles and/or the additional nozzles can be adjusted separate to the others.

In one or more embodiments, the angles of the nozzles and/or the additional nozzles is set or adjusted between 10 and 15 degrees compared to the longitudinal axis of the washing tube.

In one or more embodiments, the washing tube is equipped with an admission manifold and wherein the washing tube is equipped with a number of exits from the admission manifold to the nozzles, wherein each of these exits are equipped with a valve, so that the water pressure is the same before the valves.

In one or more embodiments, the valves and/or nozzles can be controlled automatically.

In one or more embodiments, the water flow to the nozzles can be adjusted separately for each nozzle, or wherein the water flow to the nozzles can be adjusted separately for a pair of nozzle.

In one or more embodiments, the washing tube is equipped with an outlet in the form of a 90 degree bend, which can be turned.

In one or more embodiments, the inlet and outlet can be raised or lowered relative to each other.

In one or more embodiments, the washing tube is equipped with further counter-current nozzles, which are placed and directed so that they substantially spray water in the opposite direction relative to the number of nozzles arranged to generate the water jet, so that a counter-current arises. In one or more embodiments, the number of counter-current nozzles ranges between 5 and 20.

In one or more embodiments, the washing tube is partially filled with water. Partially filled with water means that the tube is not completely filled with water, and this ensures that when the product is moved through the tube, a splash effect is obtained when the product exits and then re-enters the water in the tube.

In one or more embodiments, the washing tube is split into two or more smaller sections. In one or more embodiments, the washing tube can be extended by adding an additional section before the outlet of after the inlet.

In one or more embodiments, the washing device is arranged to use seawater surrounding a fishing vessel carrying the washing device as the water creating the water flow in the washing tube, and wherein the washing device is further arranged to dispose the used seawater back into the surroundings of the fishing vessel without the seawater leaving the washing device. By using the seawater from the surroundings and by disposing it back into the surroundings without the seawater leaving the washing device a clean and environmental solution is used.

In one or more embodiments, the washing device further comprises a sorting tube attached to the washing tube.

The invention will be explained further in the following with reference to the figures, in which
Fig. 1 shows a washing device according to an embodiment of the invention.
Fig. 2 shows a sorting tube of a washing device according to an embodiment of the invention.
Fig. 3 shows an assembled washing device according to an embodiment of the invention, where the washing device is viewed from the backside of the washing tube.
Fig. 4 shows the front side of the washing tube and the joint between the washing tube and the sorting tube according to an embodiment of the invention.

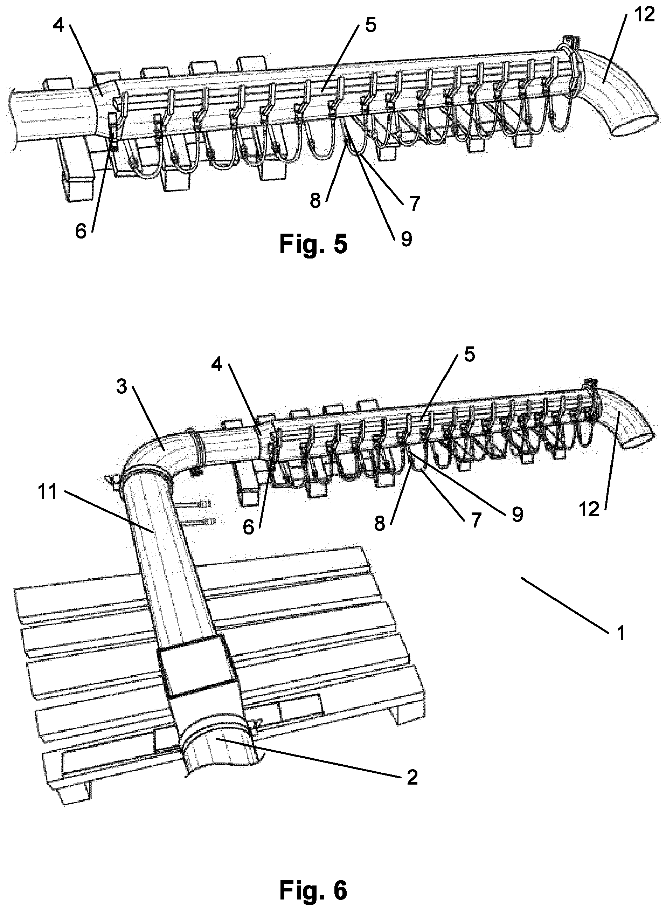

Fig. 5 shows the front side of the washing tube and an associated bend according to an embodiment of the invention.
Fig. 6 shows the front side of the washing tube and the associated bend as well as the bend creating the transition to the sorting tube according to an embodiment of the invention.

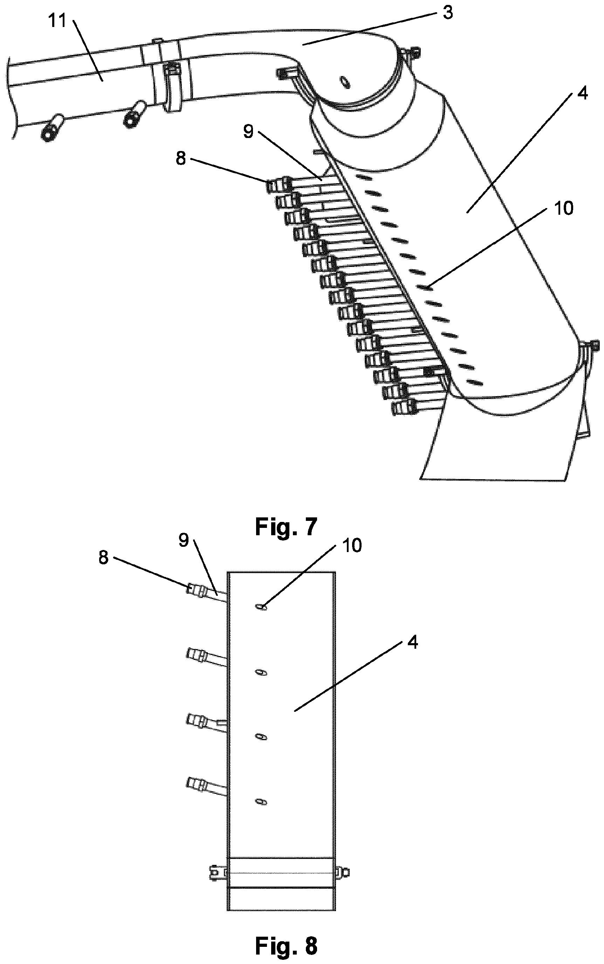

Fig. 7 shows a washing tube and the transition to the washing tube, viewed obliquely from below according to an embodiment of the invention.
Fig. 8 shows a section of the washing tube according to an embodiment of the invention, where the washing tube is viewed from below.

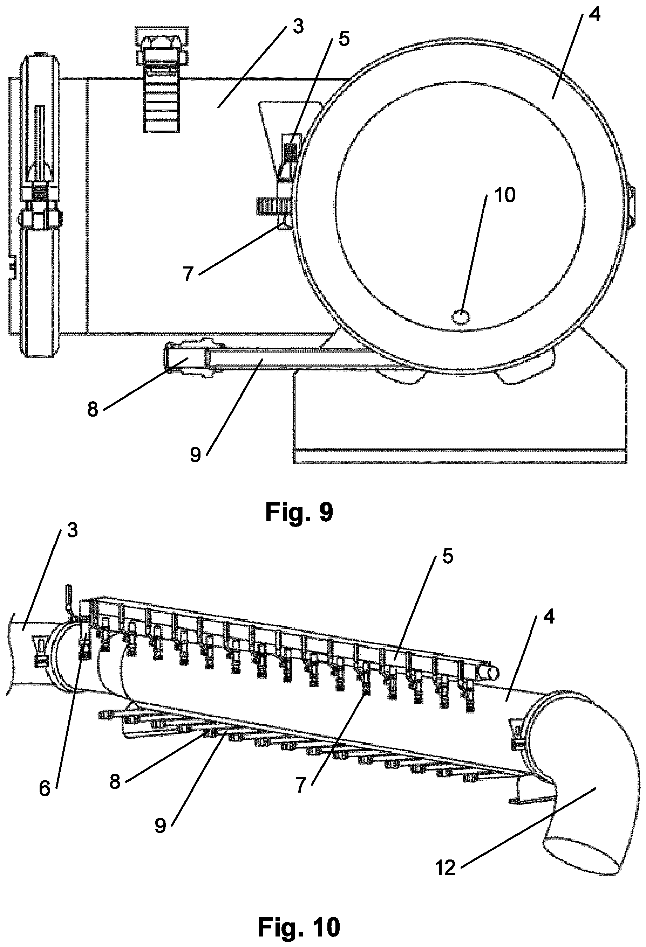

Fig. 9 shows a cut trough of the washing tube, viewed from the end, according to an embodiment of the invention.
Fig. 10 shows a perspective of the washing tube according to an embodiment of the invention.

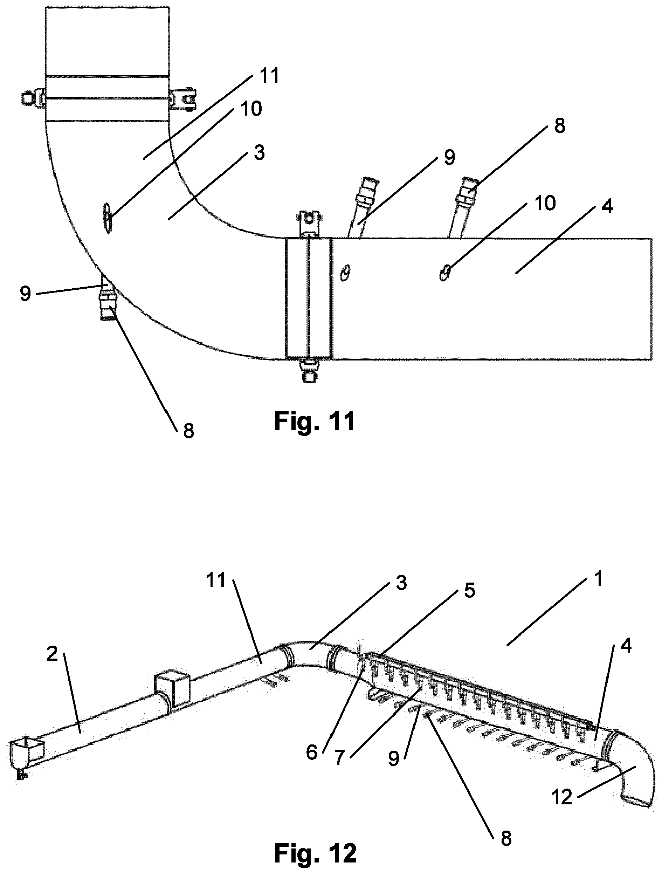

Fig. 11 shows a transition from a washing tube to a 90 degree bend and from the bend to a sorting tube according to an embodiment of the invention.
Fig. 12 shows a perspective image of an assembled structure according to an embodiment of the invention with washing tube, sorting tube and bends.
Figs 13-17 show an alternative embodiment according to the invention.
Figs 18-20 show yet another embodiment of the invention.

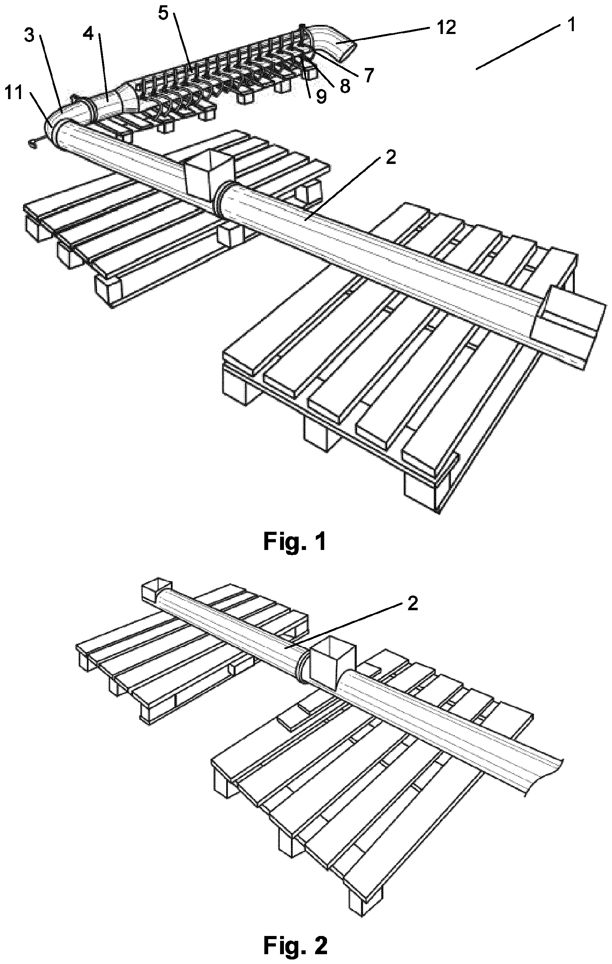

I.a. Fig. 1 shows the assembled washing device 1 with the inlet tube 2 at the front. Here the two rectangular openings function as inlets for the fish or shellfish to be washed. After the inlet tube 2, a 90 degree bend 3 is mounted, creating the transition to the actual washing tube 4.

The inlet tube 2 is shown in Fig. 2 and operates in the manner that the product is fed through one of the rectangular openings, for example by means of gravitational force, and flows towards the washing tube 4.

The washing tube 4 is equipped with admission manifold 5 (also called inlet manifold), which in the present example is supplied with water from a two inch tube 6 with a pressure of for example three bars. The water used can be seawater that is taken directly from the sea, or piped water to which, if desired, for example salt or vinegar is added, and the temperature can be selected, so that it is ideal for the product.

The washing tube 4 is equipped with a number of exits 7 from the admission manifold 5, and these exits 7 are equipped with a ball-check valve 8 each. After the ball-check valve 8, a feeding tube 9 is placed, which is inserted in the washing tube 4 at the other end. In the preferred embodiment, the water is conducted tangentially into the washing tube 4 close to the inner tube surface and at a small angle, pointing forward relative to the direction of advancement of the fish or shellfish to be washed.

The washing tube is equipped with a number of nozzles 10, which by means of the water pressure cause the water to flow around in the washing tube 4, and as these nozzles 10 are angled relative to the washing tube 4, a number of water jets are formed, creating water flow, i.e. a kind of conchoidal water whirl. When fish or shellfish come into the inlet tube 2, they will be whirled round as in a washing machine, but this happens continuously through the entire tube, so that ultimately they have been around in the tubes a number of times and will then have been rinsed clean on all sides. The number of nozzles 10 may vary relative to what is to be washed, and in the shown preferred embodiment, they can all be adjusted on a ball-check valve 8 each, so that the facility can be optimized to the relevant product type.

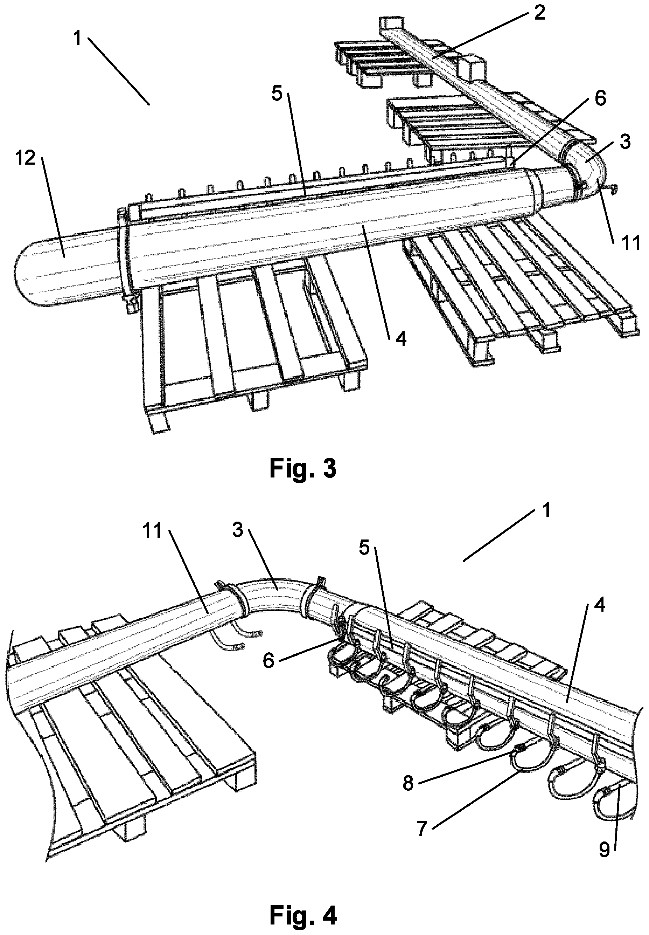

As can i.a. be seen from Fig. 4, nozzles 10 are mounted already at the outlet from a sorting tube 11, so that the washing function is activated before the actual washing tube 4. Thus, the washing process is optimized, and the extent of the facility is reduced.

As appears from several of the figures, there is also a bend 12 at the outlet that can be turned in several directions. The outlet is turned downwards, a lower counter-pressure and hence faster throughput is obtained, and when the outlet is turned upwards, a higher counter-pressure is obtained and hence a slower throughput. The throughput rate can also be regulated by raising or lowering the inlet and the outlet relative to each other. The throughput rate can also be increased by exerting pressure on the inlet, for example by water or air.

In the preferred embodiment, manually operated valves 8 are used out of consideration for a simple and reliable structure, but it is of course possible to use automatically controlled valves.

The inlet tubes 2 and washing tubes 4 can advantageously be manufactured of a seawater proof material, such as for example stainless steel of the AISI 316 type.

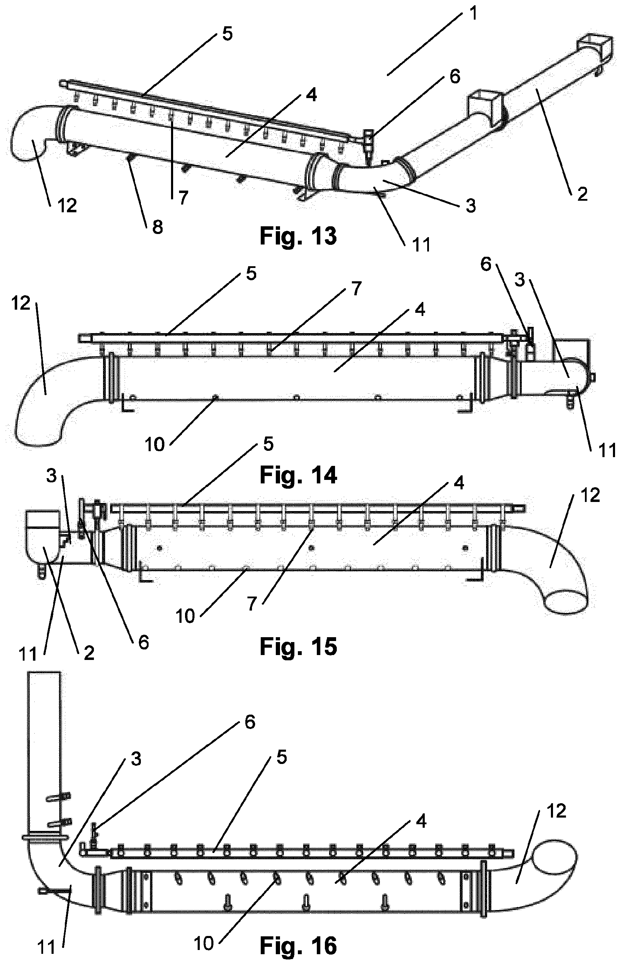

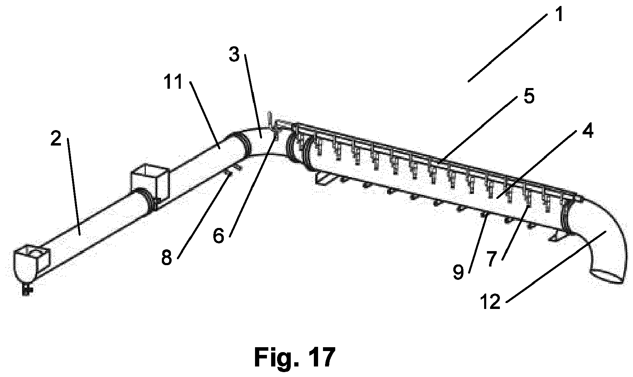

Figs 13-17 show another embodiment. It has been found to be advantageous to improve the washing device 1 by using counter-current nozzles 13 (second set of nozzles) in the structure. They are substantially placed at the same points as where the washing nozzles 10 (first set of nozzles) are placed, but they are directed, so that they spray substantially in the opposite direction. Thereby, the fish or shellfish being washed are slowed down, and more turbulence is obtained, whereby the washing function can be improved considerably.

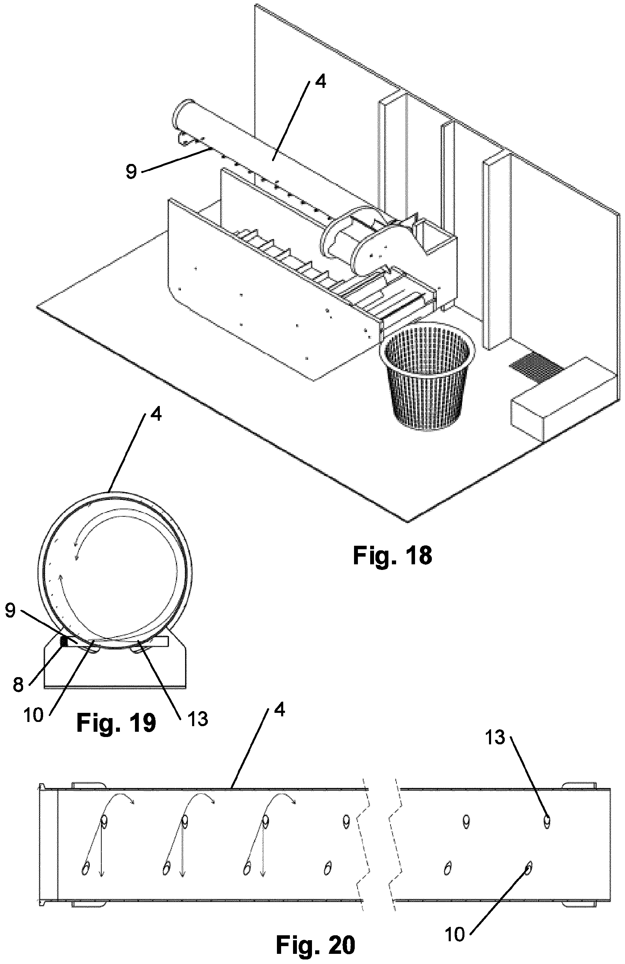

Figs 18-20 show yet another embodiment. It has been found to be advantageous to be able to place the nozzles 10 at an angle relative to the washing tube 4 and hence the washing device 1. In the embodiment, shown in Figs 18-20, the nozzles 10 are placed at an angle of 0 degrees and an angle of 15 degrees relative to the washing tube 4 and hence the washing device 1. By actually placing the nozzles 10 at said angle(s), it is possible to control the washing time.

Angles of 0 and 15 degrees of the nozzles 10 allow control of the washing time by coupling up and uncoupling the nozzles 10 with the two angles. In a first configuration, several nozzles 10 (zero degree nozzles) can be coupled, if it is desirable to wash the fish or shellfish for a longer time. An operator can thus couple in more nozzles 10, such as nozzles 10 that are placed at an angle of 0 degrees relative to the longitudinal direction of the washing tube 4, whereby the shellfish or fish remain in the tube for a longer time, as the rate of advance is reduced.

A 90 degree bend 3 can be used before the actual washing tube 4 (rinsing tube). In this context, it should be noted that this is not important to the process, as the actual washing tube 4 (rinsing tube) is the essential element. The shellfish or the fish can be added from another tube or alternatively from a conveyor.

In this embodiment shown relative to Figs 18-20, the nozzles 10 will be fixed to the structure by welding, so that it will not be possible to angle the nozzles 10 as required. This is why it is possible to couple up and uncouple nozzles 10 depending on the desired washing time.

The counter-current nozzles 13 are placed, so that they spray substantially in the opposite direction. Thereby, the fish or shellfish being washed are slowed down, and more turbulence is obtained, whereby the washing function can be improved considerably.

The invention has been described by way of a preferred embodiment, but it will be obvious to the skilled person in the field that changes of the structure can be made without it being outside the scope of the invention. Thus, the washing tubes can be changed in terms of form and dimension so that they can be adapted to various types of products to be washed.

### REFERENCE LIST

**1** - Washing device
**2 -** Inlet tube
**3 -** 90 degree bend
**4 -** Washing tube
**5 -** Admission manifold
**6 -** Two inch tube
**7 -** Exits
**8 -** Ball-check valve
**9 -** Feeding tube
**10 -** Nozzles
**11 -** Sorting tube
**12 -** Bend
**13 -** Counter-current nozzles

## Claims

1. A washing device (1) for washing fish and/or shellfish, wherein the washing device (1) comprises an inlet and a washing portion, wherein the washing portion comprises a washing tube (4) with a first diameter, which as a minimum is larger than the largest one of the products to be washed, wherein the washing portion furthermore is equipped with a number of nozzles (10) arranged to generate a water jet in the washing tube (4), which water jet creates a water flow in the washing tube (4) so that the water jet partly is used for moving one or more fish and/or shellfish around in the washing tube (4), and partly the water jet defines a direction of advancement, meaning that it contributes to advancing the one or more fish and/or shellfish.

2. The washing device (1) according to claim 1, wherein the number of nozzles (10) is arranged to generate a water jet close to the inner periphery of the washing tube (4).

3. The washing device (1) according to any one of claims 1-2, wherein the water jet creates a substantially rotating water flow in the washing tube (4).

4. The washing device (1) according to any one of claims 1-3, wherein the outlet is placed in a separate tube and a transition is placed between an inlet tube (2) and the washing tube.

5. The washing device (1) according to claim 4, wherein the transition forms a 90 degree bend (3).

6. The washing device (1) according to any one of claims 1-5, further comprising additional nozzles placed in the inlet tube (2) and in the transition.

7. The washing device (1) according to any one of claims 1-6, wherein the angles of the nozzles (10) and/or the additional nozzles can be adjusted as required.

8. The washing device (1) according to claim 7, wherein the angle of each of the nozzles (10) and/or the additional nozzles can be adjusted separate to the others.

9. The washing device (1) according to any one of claims 1-8, wherein the angles of the nozzles (10) and/or the additional nozzles is set or adjusted between 10 and 15 degrees relative to the longitudinal direction of the washing tube (4).

10. The washing device (1) according to any one of claims 1-9, wherein the washing tube (4) is equipped with an admission manifold (5) and wherein the washing tube (4) is equipped with a number of exits (7) from the admission manifold (5) to the nozzles (10), wherein each of these exits (7) are equipped with a valve (8), so that the water pressure is the same before the valves (8).

11. The washing device (1) according to claim 10, wherein the valves (8) and/or nozzles (10) can be controlled automatically.

12. The washing device (1) according to any one of claims 1-11, wherein the water flow to the nozzles (10) can be adjusted separately for each nozzle (10), or wherein the water flow to the nozzles (10) can be adjusted separately for a pair of nozzle (10).

13. The washing device (1) according to any one of claims 1-12, wherein the washing tube (4) is equipped with an outlet in the form of a 90 degree bend (12), which can be turned.

14. The washing device (1) according to any one of claims 1-13, wherein the inlet and outlet can be raised or lowered relative to each other.

15. The washing device (1) according to any one of claims 1-14, wherein the washing tube (4) is equipped with further counter-current nozzles (13), which are placed and directed so that they substantially spray water in the opposite direction relative to the number of nozzles (10) arranged to generate the water jet, so that a counter-current arises.
